# EUROPÄISCHE PATENTSCHRIFT

(11) **EP 0 797 757 B1**
(45) Veröffentlichungstag und Bekanntmachung des Hinweises auf die Patenterteilung: **08.03.2000**
(21) Anmeldenummer: 95937761.5
(22) Anmeldetag: 15.11.1995
(51) Int. Cl.: G01G 9/00, C03B 7/00

(54) **VERFAHREN ZUR BESTIMMUNG DES GEWICHTS VON FREI FALLENDEN, SCHMELZFLÜSSIGEN GLASPOSTEN**
PROCESS FOR DETERMINING THE WEIGHT OF FREE-FALLING MOLTEN GLASS GOBS
PROCEDE DE DETERMINATION DU POIDS DE PARAISONS EN VERRE FONDU EN CHUTE LIBRE

(30) Priorität: 12.12.1994 DE 4443991
(43) Veröffentlichungstag der Anmeldung: 01.10.1997
(73) Patentinhaber: Geisel, Hartmut, 38678 Clausthal-Zellerfeld (DE)
(72) Erfinder: Geisel, Hartmut, 38678 Clausthal-Zellerfeld (DE)
(74) Vertreter: Brümmerstedt, Hans Dietrich, Dipl.-Ing.
(86) Internationale Anmeldenummer: DE9501582
(87) Internationale Veröffentlichungsnummer: WO9618870

(56) Entgegenhaltungen:
- CH-A- 638 613
- DE-A- 4 143 185
- FR-A- 2 440 922
- US-A- 4 165 975
- US-A- 4 445 923
- US-A- 4 708 729
- MEASUREMENT AND CONTROL, Bd. 17, Nr. 10, November 1984 LONDON GB, Seiten 380-382, F. SHAW 'The measurement od gob lenght and weight during manufacture of glass bottles'

## Beschreibung

Die vorliegende Erfindung betrifft ein Verfahren zur Bestimmung des Gewichts von frei fallenden, schmelzflüssigen Glasposten.

Moderne Glasbehälter-Produktionsmaschinen verarbeiten bis zu 200 Glasposten pro Minute, die den Maschinen über ein Speisersystem aus der Schmelze zugeführt werden. Dabei kommt es wesentlich auf ein annähernd konstantes Gewicht der mittels einer Dosiervorrichtung erzeugten Glasposten an, da Gewichtsschwankungen zu Artikeln minderer Qualität oder gar zu Ausschuß führen. Auch bei ordnungsgemäß arbeitender Dosiervorrichtung sind nun aber Gewichtsschwankungen nicht zu vermeiden, da der Dosiervorgang u.a. vom Niveau der Glasschmelze in der Schmelzwanne und/oder von Temperaturschwankungen der Schmelze beeinflußt wird. Diese Schwankungen können mehrere Gramm pro Minute ausmachen.

Um die Glaspostengewichte im zulässigen Gewichtsbereich zu halten, werden nach einem aus dem Stand der Technik bekannten Verfahren die gefertigten Glasartikel im Abstand von 5 - 15 Min. laufend gewogen. Im Anschluß an jede Messung wird dann - sofern erforderlich - die Dosiervorrichtung manuell verstellt. Die gewogenen Artikel müssen nach dem Wiegen verworfen werden, da sie durch das Hantieren im noch kühlenden Zustand beschädigt werden.

Zur Automatisierung dieses Vorgangs wird in der US-PS 3,846,107 vorgeschlagen, die Wägung mit einer elektromechanischen Waage durchzuführen, und das ermittelte Gewicht einem Regler als Meßgröße zuzuführen. Nach einem Soll-Ist-Vergleich erfolgt dann über diesen Regler eine entsprechende Verstellung der Dosiervorrichtung. Dieses Verfahren gestattet die Gewichtsbestimmung frühestens nach Entnahme des Artikels aus der Fertigform, meistens jedoch erst sehr viel später. Dies ist mit hohem mechanischen Aufwand verbunden, wobei die Mechanik störanfällig ist und einem ständigen Verschleiß unterliegt. Zudem wird bei diesem wie auch bei dem zuvor beschriebenen Verfahren immer erst mit einer nicht unerheblichen Zeitverzögerung auf Gewichtsschwankungen reagiert.

Dieser Nachteil wird mit dem Verfahren gemäß US-PS 4,205,973 vermieden. Hier wird u.a. das Volumen und somit das Gewicht vom im Speisersystem einer Glasbehälter-Produktionslinie frei fallenden, schmelzflüssigen Glasposten bestimmt. Dazu werden zwei Zeilen-Kameras verwendet, die das Volumen des fallenden Glaspostens scheibenweise erfassen. Wenn alle Daten eines Glaspostens vorliegen, erfolgt die Berechnung seines Volumens bzw. des Gewichts über einen Rechner.

Bei diesem Verfahren wird das Gewicht der erzeugten Glasposten im Vergleich mit den vorgenannten Verfahren schon zu einem frühen Zeitpunkt bestimmt, so daß eine bessere Regelung der Dosiervorrichtung möglich ist. Erkauft wird dieser Vorteil mit einem sehr hohen technischen Aufwand. Außerdem sind die erforderlichen Kameras für den rauhen Betrieb der Glasschmelze nicht sonderlich geeignet, so daß viel Aufwand für ihre Wartung und Pflege aufgebracht werden muß.

In der DE-AS 19 59 406 ist eine nach dem Wirbelstromprinzip arbeitende Meßsonde beschrieben. In einem Anwendungsfall arbeiten zwei dieser Meßsonden als Wägevorrichtung. Dabei ändert sich durch das Gewicht des Prüflings der Abstand zwischen den Meßsonden und diesen jeweils zugeordneten, gegenüberliegenden, hochleitfähigen Scheiben. Hierdurch werden in der Meßsonde Wirbelstromverluste erzeugt, die dieser Abstandsänderung proportional sind und ein Maß für das Gewicht des Prüflings darstellen. Die Sonden arbeiten demnach als Distanzmesser.

Aufgabe der vorliegenden Erfindung ist es daher, ein Verfahren zur Bestimmung des Gewichts von schmelzflüssigen Glasposten zur Verfügung zu stellen, welches einen sehr geringen technischen Aufwand erfordert und für den rauhen Betrieb einer Glasschmelze geeignet ist. Insbesondere sollen die Gewichtsschwankungen der erzeugten Glasposten auf ein Minimum reduziert werden.

Erfindungsgemäß wird diese Aufgabe mittels eines Verfahrens der eingangs genannten Art dadurch gelöst, daß die schmelzflüssigen Glasposten durch ein elektro-magnetisches Wechselfeld geführt und die daraus resultierenden Wirbelstromverluste des Wechselfeldes als Maß für das Glaspostengewicht meßtechnisch erfaßt werden.

Das Verdienst der vorliegenden Erfindung liegt in der Erkenntnis, daß die elektrische Leitfähigkeit von schmelzflüssigem Glas für die Gewichtsbestimmung von Glasposten ausgenutzt werden kann. Ausgehend von diesem grundlegenden Lösungsansatz ist die gestellte Aufgabe mit sehr einfachen Mitteln lösbar.

Wird z. B. das elektromagnetische Wechselfeld durch eine Spule mit angelegter Wechselspannung erzeugt, so haben die in dem Glasposten bei seinem Fall durch das Wechselfeld erzeugten Wirbelströme eine Minderung der Wechselspannung an der Spule zur Folge. Eine Messung dieser Wechselspannung über der Zeit, die beim Durchlaufen des Glaspostens durch das Wechselfeld vergeht, erlaubt einen Rückschluß auf die Ausmaße des Glaspostens und kann somit zur Ermittlung des Volumens bzw. Gewichts herangezogen werden. Das elektromagnetische Wechselfeld ist zur Fallbahn des Glaspostens vorteilhaft so auszurichten, daß dem elektrischen Wechselfeld beim Passieren des Glaspostens möglichst viel Energie in Form von Wirbelströmen entzogen wird, und daß ein Rückschluß auf die Konfiguration des Glaspostens möglich ist.

Ein auf dem erfindungsgemäßen Verfahren basierendes System ist gegenüber Verschmutzung durch Staub, Öl, Wasser und gegenüber hohen Umgebungstemperaturen unempfindlich.

Es ist von besonderem Vorteil, wenn das oben beschriebene grundlegende Verfahren in eine Produktionslinie für Glasbehälter eingebunden wird. Gemäß Anspruch 2 geschieht das dadurch, daß das über den Effekt der Wirbelstromverluste erfaßbare Maß für das Glaspostengewicht zur Regelung einer Dosiervorrichtung herangezogen wird, welche der Einstellung des Glaspostengewichts dient. Dazu wird das ermittelte Gewichtsmaß als Meßgröße einem Regelkreis zugeführt, über den bei einer Abweichung vom Sollmaß eine automatische Verstellung der Dosiervorrichtung erfolgt.

Hierdurch wird es, wie auch bei dem Verfahren gemäß US-PS 4,205,973, im Vergleich dazu aber mit sehr viel einfacheren Mitteln, möglich, schon zu einem frühen Zeitpunkt nach der Erzeugung der Glasposten auf eventuelle Gewichtsschwankungen reagieren zu können.

Die vorliegende Erfindung wird nachstehend anhand eines Ausführungsbeispieles näher erläutert. In der dazugehörigen Zeichnung zeigt:
- Fig. 1: ein Blockschema zur Darstellung der Ausnutzung des über den Effekt der Wirbelstromverluste erfaßbaren Glaspostengewichts zur Regelung einer Dosiervorrichtung in einer Glasbehälter-Produktionslinie, und
- Fig. 2: ein Analog-Signal, das von der Auswerte-Elektronik erzeugt wird, wenn ein Glasposten das elektromagnetische Wechselfeld passiert.

Das für die Durchführung des Verfahrens erforderliche elektromagnetische Wechselfeld 2 wird mittels einer Spule 6 erzeugt, die im Fallweg 22 von Glasposten 1 angeordnet ist. Solche Fallwege 22 sind in Glasbehälter-Produktionslinien unmittelbar hinter der nicht dargestellten Dosiervorrichtung oder an den ebenfalls nicht dargestellten Übergangsstellen zwischen den Zubringerrinnen und den Glasformen vorhanden und kommen als Installationsorte für die Spule 6 in Frage.

Ein Wechselstromgenerator 16 speist die Spule 6 über Leitungen 18, 5 und 19, 4 mit Wechselstrom. Über eben diese Leitungen ist auch eine Auswerte-Elektronik 3 mit der Spule 6 verbunden.

Gelangt nun ein Glasposten 1 in den Bereich des elektromagnetischen Wechselfeldes 2, wird dies aufgrund der Wärmestrahlung mittels eines Lichtempfängers 23 detektiert, der über eine Leitung 24 die Auswerte-Elektronik 3 startet. Beim Fall des Glaspostens 1 durch das elektromagnetische Wechselfeld 2 werden im Glasposten 1 Wirbelströme erzeugt, die dem elektromagnetischen Wechselfeld 2 Energie entziehen. Dabei ist der durch den Energieentzug an der Spule 6 meßbare Spannungsabfall umso größer, je größer die das elektromagnetische Wechselfeld durchlaufende Glasmasse ist. Die Spannungsänderung wird der Auswerte-Elektronik 3 über die Leitungen 4, 19 und 5, 18 verfügbar gemacht und dort verarbeitet.

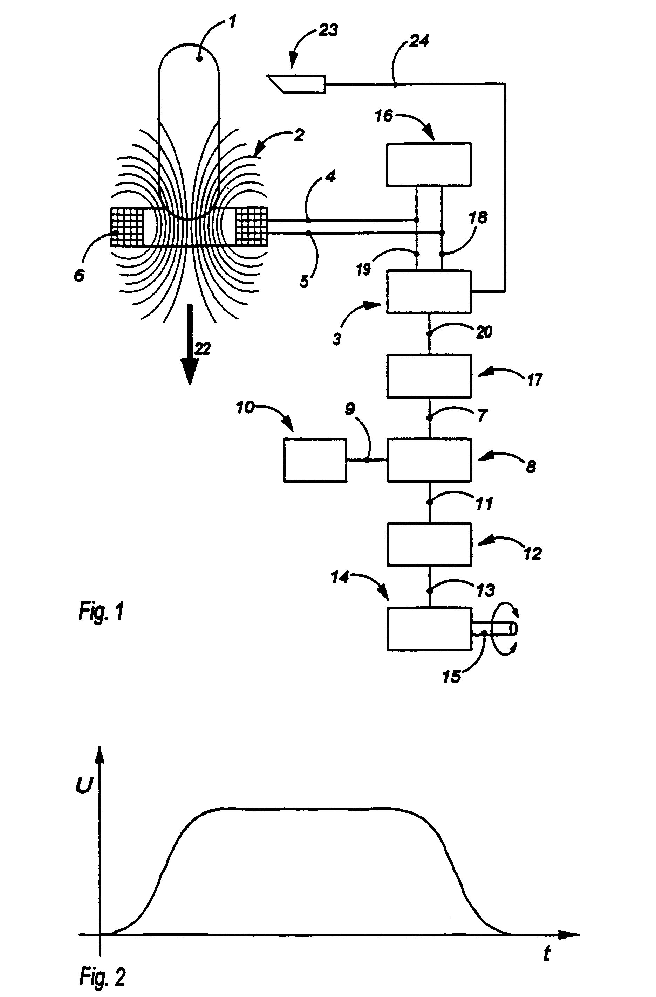

Das Ausgangssignal der Auswerte-Elektronik 3 ist in Fig. 2 dargestellt. Dieses Signal gelangt über die Leitung 20 zu einem Analog/Digital-Wandler 17 und von dort über die Leitung 7 zu einem Rechner 8. Im Rechner 8 erfolgt die Bewertung des eingehenden Signals und die Zuordnung eines Gewichts des Glaspostens 1. Durch Wägung eines fertigen Artikels mit der Waage 10 erhält der Rechner 8 über die Datenleitung 9 eine absolute Gewichtsangabe, die eine spätere absolute Zuordnung der gemessenen Gewichtsgrößen ermöglicht.

Nach jeder Messung vergleicht der Rechner 8 das gemessene Gewicht mit einem Soll-Gewicht. Treten Differenzen auf, so wird über eine Leitung 11 eine Motorsteuerung 12 aktiviert. Diese ist über eine Leitung 13 mit einer Motor-Getriebe-Einheit 14 verbunden, deren Abtriebswelle 15 die Dosiervorrichtung verstellt. Damit werden die Gewichtsabweichungen nachfolgender Glasposten 1 zu Null geregelt.

## Patentansprüche

1. Verfahren zur Bestimmung des Gewichts von frei fallenden, schmelzflüssigen Glasposten, dadurch gekennzeichnet, daß die Glasposten (1) durch ein elektromagnetisches Wechselfeld (2) geführt und die daraus resultierenden Wirbelstromverluste als Maß für das Glaspostengewicht meßtechnisch erfaßt werden.

2. Verfahren nach Anspruch 1, wobei das Gewicht der Glasposten mittels einer Dosiervorrichtung eingestellt wird, dadurch gekennzeichnet, daß das über den Effekt der Wirbelstromverluste erfaßbare Maß für das Glaspostengewicht zur Regelung der Dosiervorrichtung herangezogen wird.

## Revendications

1. Procédé de détermination du poids de paraisons en verre fondu en chute libre, caractérisé en ce que les paraisons (1) passent à travers un champ électromagnétique alternatif (2) et que les pertes par courant parasite, qui en résultent, sont, comme technique de mesure, détectées comme critère de mesure du poids des paraisons.

2. Procédé suivant la revendication 1, le poids des paraisons étant réglé au moyen d'un dispositif de dosage, caractérisé en ce que le critère de mesure du poids des paraisons qui peut être détecté par l'effet des pertes par courant parasite sert au réglage du dispositif de dosage.

## Claims

1. Process for determining the weight of free falling, molten glass gobs, characterized in that the glass gobs (1) are directed through an electromagnetic alternating field (2) and the eddy current losses resulting from this are determined by measurement means as a measure of the weight of the glass gobs.

2. Process according to claim 1 with the weight of the glass gobs being set by means of a metering device, characterized in that the measure of the glass gob weight which can be determined through the effect of the eddy current losses is used for adjusting the metering device.
